# EUROPÄISCHE PATENTSCHRIFT

(11) **EP 2 732 221 B1**
(45) Veröffentlichungstag und Bekanntmachung des Hinweises auf die Patenterteilung: **08.04.2020**
(21) Anmeldenummer: 12743747.3
(22) Anmeldetag: 08.08.2012
(51) Int. Cl.: F25B 15/06, F25B 15/14

(54) **ABSORPTIONSKÄLTEMASCHINE**
ABSORPTION REFRIGERATION MACHINE
MACHINE FRIGORIFIQUE À ABSORPTION

(30) Priorität: 11.08.2011 DE 102011110018
(43) Veröffentlichungstag der Anmeldung: 21.05.2014
(73) Patentinhaber: Major Bravo Limited, Road Town, Tortola (VG)
(72) Erfinder: HEINZL, Wolfgang, 83561 Ramerberg (DE)
(74) Vertreter: Cabinet Beau de Loménie
(86) Internationale Anmeldenummer: PCT/EP2012/065519
(87) Internationale Veröffentlichungsnummer: WO 2013/021005

(56) Entgegenhaltungen:
- EP-A1- 2 123 997
- WO-A1-2007/144024
- US-A1- 2011 126 563

## Beschreibung

Die Erfindung betrifft eine Absorptionskältemaschine mit einem Verdampfer zum Verdampfen eines Kältemittels unter Aufnahme von Wärme aus einem Kälteträgerkreislauf und einem Absorber zur Absorption des Kältemitteldampfes durch das aufkonzentrierte, kältemittelarme Arbeitsstoffpaar.

Bei einer solchen Absorptionskältemaschine umfasst das Arbeitsstoffpaar in der Regel eine Salzlösung sowie das Kältemittel, wobei sich insbesondere LiBr und Wasser bewährt haben. LiBr-Lösungen sind nun aber insbesondere in Anwesenheit von Sauerstoff hochkorrosiv. Demzufolge werden Absorptionskältemaschinen der eingangs genannten Art bisher nur als geschlossene Anlagen betrieben, wobei im Normalfall Verdampfer und Absorber in einem ersten Gehäuse im Unterdruck auf einer Druckstufe p1 und ein Desorber zur Desorption des Kältemittels aus dem kältemittelreichen Arbeitsstoffpaar und ein Kondensator zur Kondensation des Kältemittels mit anschließender Entspannung in einem weiteren Gehäuse im Unterdruck auf einer Druckstufe p2 untergebracht sind. Der üblicherweise unterhalb von 100 mbar liegende Unterdruck bringt zwar einen niedrigen Sauerstoffpartialdruck mit sich. Dennoch müssen in der Praxis zur Korrosionsvermeidung hochlegierte Edelstähle eingesetzt werden. Hinzu kommt, dass die Salzlösung bisher über Rohre verrieselt wird und mit allen Komponenten insbesondere Gehäuse und Rohren in Kontakt kommt.

Bisher werden vor allem horizontale Rohrbündelapparate eingesetzt, auf die das Arbeitsmittel Wasser oder die Salzlösung über Lochböden verteilt wird. Zur Sicherstellung eines guten Wärme- und Stoffübergangs müssen das Wasser und die Salzlösung die Rohre vollständig benetzen. Um eine solche gleichmäßige Benetzung der Rohre zu erzielen, muss stets mit Massenströmen gearbeitet werden, die größer sind als die für den idealen Wärme- und Stoffaustausch benötigten Mindestmengen.

Die Druckschrift US 2011/0126563 A1 offenbart eine Absorptionskältemaschine mit den Merkmalen des Oberbegriffs des Anspruchs 1. Weitere herkömmliche Absorptionskältemaschinen sind aus den Druckschriften WO 2007 / 144024 A1 und EP 2 123 997 A1 bekannt.

Der Erfindung liegt im Wesentlichen die Aufgabe zugrunde, eine verbesserte Absorptionskältemaschine der eingangs genannten Art zu schaffen, bei der die zuvor erwähnten Nachteile beseitigt sind. Zudem soll auch eine sogenannte offene Absorptionskältemaschine realisierbar sein, bei der dem Prozess konzentrierte Salzlösung von außen über die Systemgrenze zugeführt und verdünnte Salzlösung über die Systemgrenze nach außen geführt wird, das heißt die Absorptionskältemaschine nur den Verdampfer und den Absorber umfassen und nicht auch einen Desorber und einen Kondensator enthalten muss.

Bei einer Absorptionskältemaschine gemäß der vorliegenden Erfindung weist der Verdampfer mehrere Verdampfungseinheiten auf, die jeweils einen Kälterträgerkanal, der vom Kälteträger durchströmt und zumindest teilweise von einer wärmeleitenden, dampf- und flüssigkeitsdichten Wand begrenzt ist, und wenigstens einen Kälteträgerkanal aufweisen, der an die wärmeleitende Wand angrenzt und vom Kältemittel beaufschlagt ist, wobei der Kältemittelkanal umfasst auf seiner der wärmeleitenden Wand gegenüberliegenden Seite durch eine dampfdurchlässige, flüssigkeitsdichte Membranwand von einem Dampfraum getrennt ist, und weist der Absorber mehrere Absorptionseinheiten auf, die jeweils einen Kühlmittelkanal, der von einem Kühlmittel durchströmt und zumindest teilweise von einer wärmeleitenden, dampf- und flüssigkeitsdichten Wand begrenzt ist, und wenigstens einen Absorptionkanal aufweisen, der an die wärmeleitende Wand angrenzt, wobei dem das aufkonzentrierte, kältemittelarme Arbeitsstoffpaar zugeführt wird und wobei der Absorptionskanal über eine dampfdurchlässige, flüssigkeitsdichte Membranwand, die auf seiner der wärmeleitenden Wand gegenüberliegenden Seite vorgesehen ist, mit Kältemitteldampf aus dem Dampfraum beaufschlagt wird.

Erfindungsgemäß ist zur Bildung einer integrierten Verdampfer-/Absorbereinheit in einer aufeinanderfolgenden Anordnung der mehreren Verdampfungs- und Absorptionseinheiten abwechselnd jeweils eine Verdampfungseinheit und eine Absorptionseinheit vorgesehen, wobei ein jeweiliges Paar von unmittelbar aufeinanderfolgenden Verdampfungs- und Absorptionseinheiten bzw. Absorptions- und Verdampfungseinheiten einander zugewandte dampfdurchlässige, flüssigkeitsdichte Membranwände aufweist, die zwischen zwei Absorptionseinheiten angeordneten Verdampfungseinheiten jeweils auf wenigstens zwei einander gegenüberliegenden Seiten des Kälteträgerkanals jeweils einen Kältemittelkanal aufweisen, der von dem zugeordneten Kälteträgerkanal durch eine wärmeleitende, dampf- und flüssigkeitsdichte Wand getrennt ist, wobei der Kältemittelkanal auf seiner der wärmeleitenden Wand gegenüberliegenden Seite durch eine dampfdurchlässige, flüssigkeitsdichte Membranwand vom Dampfraum getrennt ist, und die zwischen zwei Verdampfungseinheiten angeordneten Absorptionseinheiten jeweils auf wenigstens zwei einander gegenüberliegenden Seiten des Kühlmittelkanals jeweils einen Absorptionskanal aufweisen, der von dem Kühlmittelkanal durch eine wärmeleitende, dampf- und flüssigkeitsdichte Wand getrennt ist, wobei der Absorptionskanal über eine dampfdurchlässige, flüssigkeitsdichte Membranwand, die auf einer der wärmeleitenden Wand gegenüberliegenden Seite des Absorptionskanals vorgesehen ist, mit Dampf aus dem Dampfraum beaufschlagt wird.

Aufgrund dieser Ausbildung kann die Absorptionskältemaschine zumindest teilweise als modulares Strömungssystem mit einer Vielzahl von Rahmenelementen ausgeführt sein, wobei die verschiedenen Funktionseinheiten wie insbesondere ein jeweiliger Kälteträgerkanal, ein jeweiliger Kältemittelkanal, ein jeweiliger Kühlmittelkanal und ein jeweiliger Absorptionskanal jeweils in Form eines solchen Rahmenelements vorgesehen sein können. Die Rahmenelemente können mit Stegstrukturen versehen sein, über die sie insbesondere zur Bildung einer jeweiligen Verdampfungseinheit und einer jeweiligen Absorptionseinheit miteinander verbindbar sind. Die Rahmenelemente können jeweils einen von einem äußeren Rahmen umschlossenen Innenbereich umfassen, der vorzugsweise mit einem insbesondere gitterartigen Abstandshalter versehen sein kann, der auf wenigstens einer Seite zur Bildung eines jeweiligen Kanals insbesondere jeweils mit einer Funktionsfläche versehen sein kann, die vorteilhafterweise jeweils durch eine Folie oder eine Membran gebildet ist.

Die Absorptionskältemaschine kann also zumindest teilweise insbesondere aus Rahmenelementen aufgebaut sein, die aufgebrachte Funktionsflächen in Form einer Folie oder Membran umfassen können. Es sind beispielsweise die folgenden Arten von Rahmenelementen denkbar: beidseitig jeweils mit einer wärmeleitenden Folie versehenes Rahmenelement, einseitig mit einer dampfdurchlässigen, flüssigkeitsdichten Membranwand versehenes Rahmenelement, Rahmenelement mit einer wärmeleitenden Folie auf der einen Seite und einer dampfdurchlässigen, flüssigkeitsdichten Membranwand auf einer weiteren, insbesondere gegenüberliegenden Seite, usw. Insbesondere eine jeweilige Verdampfungseinheit und eine jeweilige Absorptionseinheit können vorteilhafterweise aus solchen Rahmenelementen aufgebaut sein.

Die verschiedenen Kanäle einschließlich der diese begrenzenden wärmeleitenden, dampf- und flüssigkeitsdichten Wände bzw. dampfdurchlässigen bzw. flüssigkeitsdichten Membranwände bestehen bevorzugt aus Kunststoff.

Da die Salzlösung, der Kälteträger, das Kältemittel, das Kühlmittel usw. stets in geschlossenen Kanälen geführt sind, tritt kein Bespritzen und Benetzen des betreffenden Gehäuses mehr auf. Durch das Führen des das Kältemittel und die Salzlösung umfassenden Arbeitsstoffpaares in geschlossenen Kanälen ist zudem sichergestellt, dass bei idealen Massenströmen die Austauschoberflächen vollständig benetzt sind.

Da die verschiedenen Kanäle einschließlich der diese begrenzenden wärmeleitenden, dampf- und flüssigkeitsdichten Wände bzw. dampfdurchlässigen, flüssigkeitsdichten Membranwände ausschließlich aus Kunststoff bestehen können, ist problemlos auch eine sogenannte offene Absorptionskältemaschine realisierbar, die lediglich den Verdampfer und den Absorber umfassen kann und nicht auch einen Desorber und einen Kondensator umfassen muss. Bei einer solchen offenen Absorptionskältemaschine kann dem Prozess konzentrierte Salzlösung, insbesondere LiBr-Lösung, von außen über die Systemgrenze zugeführt und verdünnte Salzlösung bzw. LiBr-Lösung über die Systemgrenzen nach außen geführt werden. Aufgrund der ausschließlichen Verwendung von Kunststoffen kann praktisch keine Korrosion mehr stattfinden. Sauerstoff, der entsprechend seines Partialdrucks in der konzentrierten Salzlösung gelöst ist, kann bei der Verwendung von Kunststoffen zugelassen werden. Bei der bisher üblichen Verwendung von Stahl würde dies zur Korrosion und Zerstörung der Anlage führen.

Eine betreffende offene Absorptionskältemaschine kann also lediglich den Verdampfer und den Absorber ohne einen Desorber und Kondensator umfassen, wobei Verdampfer und Absorber in einem gemeinsamen Gehäuse untergebracht sein können. In der Zentrale zur Kälteträgererzeugung, insbesondere Kaltwassererzeugung, sind also nur der Kälteträger und konzentrierte Salzlösung, insbesondere konzentriertes LiBr erforderlich. Die Regeneration der verdünnten Salzlösung kann an einem anderen Ort, an dem beispielsweise Abwärme vorhanden ist, stattfinden. Mit solchen offenen Systemen ist beispielsweise auch ein Speicherbetrieb aus einem Tank mit konzentrierter Salzlösung möglich.

Erfindungsgemäß ist zur Bildung einer integrierten Verdampfer-/ Absorbereinheit in einer aufeinanderfolgenden Anordnung von mehreren Verdampfungs- und Absorptionseinheiten abwechselnd jeweils eine Verdampfungseinheit und eine Absorptionseinheit vorgesehen, wobei ein jeweiliges Paar von unmittelbar aufeinanderfolgenden Verdampfungs- und Absorptions- bzw. Absorptions- und Verdampfungseinheiten einander zugewandte dampfdurchlässige, flüssigkeitsdichte Membranwände aufweist.

Die zwischen zwei Absorptionseinheiten angeordneten Verdampfungseinheiten weisen jeweils auf wenigstens zwei einander gegenüberliegenden Seiten des Kälteträgerkanals jeweils einen von diesem durch eine wärmeleitende, dampf- und flüssigkeitsdichte Wand getrennten Kältemittelkanal auf, der auf seiner der wärmleitenden Wand gegenüberliegenden Seite durch eine dampfdurchlässige, flüssigkeitsdichte Membranwand vom Dampfraum getrennt ist.

Die zwischen zwei Verdampfungseinheiten angeordneten Absorptionseinheiten weisen jeweils auf wenigstens zwei einander gegenüberliegenden Seiten des Kühlmittelkanals jeweils einen von diesem durch eine wärmeleitende, dampf- und flüssigkeitsdichte Wand getrennten Absorptionskanal auf, der über eine auf seiner der wärmeleitenden Wand gegenüberliegenden Seite vorgesehene dampfdurchlässige flüssigkeitsdichte Membranwand mit Dampf aus dem Dampfraum beaufschlagt wird.

Der Druck im Dampfraum ist zweckmäßigerweise so weit abgesenkt, dass an der wärmeleitenden, dampf- und flüssigkeitsdichten Wand im Kältemittelkanal einer jeweiligen Verdampfungseinheit Dampf durch Abkühlen des Kälteträgers entsteht und dieser Dampf durch die dampfdurchlässige, flüssigkeitsdichte Membranwand in den Dampfraum eintritt, über den der Absorptionskanal einer jeweiligen Absorptionseinheit mit Dampf beaufschlagt wird.

Der Verdampfer und der Absorber können wie bereits erwähnt in einem gemeinsamen, den Dampfraum umfassenden Gehäuse untergebracht sein.

Wie ausgeführt, kann die Absorptionskältemaschine insbesondere auch als sogenannte offene Absorptionskältemaschine ohne Desorber und ohne Kondensator ausgeführt sein. Gemäß einer alternativen zweckmäßigen Ausführungsform kann die Absorptionskältemaschine jedoch auch einen Desorber zur Desorption des Kältemittels aus dem kältemittelreichen Arbeitsstoffpaar und einen Kondensator zur Kondensation des Kältemittels mittels anschließender Entspannung umfassen.

Während der Absorption kann der im Verdampfer gebildete Kältemitteldampf durch das vom Desorber kommende aufkonzentrierte, kältemittelarme Arbeitsstoffpaar absorbiert werden. Die dabei frei werdende Lösungswärme wird in der Regel nach außen abgeführt, um den Absorptionsprozess aufrecht zu erhalten. Im Desorber bzw. Austreiber wird ein Teil des Kältemittels aus dem kältemittelreichen Arbeitsstoffpaar ausgetrieben.

In einem Lösungswärmetauscher kann eine Wärmeübertragung zur Abkühlung der aus dem Desorber kommenden heißen, kältemittelarmen Arbeitspaar erfolgen. Die vom Desorber kommende, kältemittelarme Lösung kann im Lösungswärmetauscher abgekühlt werden, wobei gleichzeitig die in den Desorber tretende kältemittelreiche Lösung vorgewärmt werden kann. Durch einen solchen Lösungswärmetauscher wird der Energiebedarf zur Desorption des Kältemittels im Desorber verringert.

Gemäß einer bevorzugten praktischen Ausführungsform der erfindungsgemäßen Absorptionskältemaschine umfasst der Desorber wenigstens eine Desorptionseinheit mit einem von einem Heizmittel durchströmten, zumindest teilweise von einer wärmeleitenden, dampf- und flüssigkeitsdichten Wand begrenzten Heizmittelkanal und wenigstens einem an die wärmeleitende Wand angrenzenden, vom kältemittelreichen Arbeitsstoffpaar beaufschlagten Desorptionskanal, der auf seiner der wärmeleitenden Wand gegenüberliegenden Seite durch eine dampfdurchlässige, flüssigkeitsdichte Membranwand von einem weiteren Dampfraum getrennt ist, während der Kondensator wenigstens eine Kondensationseinheit mit einem von dem Kühlmittel durchströmten, zumindest teilweise von einer wärmeleitenden, dampf- und flüssigkeitsdichten Wand begrenzten Kühlmittelkanal und wenigstens einem an die wärmeleitende Wand angrenzenden Kondensationskanal umfasst, der über eine auf seiner der wärmeleitenden Wand gegenüberliegenden Seite vorgesehene dampfdurchlässige, flüssigkeitsdichte Membranwand mit Dampf aus dem weiteren Dampfraum beaufschlagt wird.

Bevorzugt umfasst der Desorber mehrere Desorptionseinheiten.

Von Vorteil ist auch, wenn der Kondensator mehrere Kondensationseinheiten umfasst.

Zweckmäßigerweise ist wenigstens eine Desorptionseinheit vorgesehen, die auf wenigstens zwei einander gegenüberliegenden Seiten des Heizmittelkanals jeweils einen von diesem durch eine wärmeleitende, dampf- und flüssigkeitsdichte Wand getrennten Desorptionskanal aufweist, der auf seiner der wärmeleitenden Wand gegenüberliegenden Seite durch eine dampfdurchlässige, flüssigkeitsdichte Membranwand vom weiteren Dampfraum getrennt ist.

Von Vorteil ist insbesondere auch, wenn wenigstens eine Kondensationseinheit vorgesehen ist, die auf wenigstens zwei einander gegenüberliegenden Seiten des Kühlmittelkanals jeweils einen von diesem durch eine wärmeleitende, dampf- und flüssigkeitsdichte Wand getrennten Kondensationskanal aufweist, der über eine auf seiner der wärmeleitenden Wand gegenüberliegenden Seite vorgesehene dampfdurchlässige, flüssigkeitsdichte Membranwand mit Dampf aus dem weiteren Dampfraum beaufschlagt wird.

Bevorzugt herrscht sowohl im ersten Dampfraum als auch im weiteren Dampfraum Unterdruck vor, wobei vorzugsweise der Druck im weiteren Dampfraum größer ist als im ersten Dampfraum.

Bevorzugt sind der Verdampfer und der Absorber einerseits und der Desorber und der Kondensator andererseits in zwei getrennten, den ersten bzw. den weiteren Dampfraum umfassenden Gehäusen untergebracht.

Gemäß einer zweckmäßigen Ausführungsform ist zur Bildung einer integrierten Desorber-/Kondensatoreinheit in einer aufeinanderfolgenden Anordnung von mehreren Desorptions- und Kondensationseinheiten abwechselnd jeweils eine Desorptionseinheit und eine Kondensationseinheit vorgesehen, wobei ein jeweiliges Paar von unmittelbar aufeinanderfolgenden Desorptions- und Kondensations- bzw. Kondensations- und Desorptionseinheiten vorzugsweise einander zugewandte dampfdurchlässige, flüssigkeitsdichte Membranwände aufweist.

Für den Absorber und den Kondensator kann ein gemeinsamer Kühlmittelkreislauf vorgesehen sein.

Auch die verschiedenen Kanäle des Desorbers und des Kondensators einschließlich der diese begrenzenden wärmeleitenden, dampf- und flüssigkeitsdichten Wände bzw. dampfdurchlässigen, flüssigkeitsdichten Membranwände können wieder aus Kunststoff bestehen. Die Desorptions- und Kondensationseinheiten können ebenso wie die Verdampfungs- und Absorptionseinheiten vorteilhafterweise wieder durch jeweils wenigstens eine Folie und/oder wenigstens eine Membran umfassende Rahmenelemente der zuvor genannten Art gebildet sein, wobei zumindest diese Rahmenelemente bevorzugt ausschließlich aus Kunststoff bestehen.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform einer einen Verdampfer, einen Absorber, einen Desorber und einen Kondensator umfassenden Absorptionskältemaschine,
- Fig. 2: eine schematische Draufsicht einer weiteren beispielhaften Ausführungsform einer Absorptionskältemaschine, die sich von der der Fig. 1 im Wesentlichen dadurch unterscheidet, dass der Verdampfer, der Absorber, der Desorber und der Kondensator jeweils mehrere Verdampfungs-, Absorptions-, Desorptionsbzw. Kondensationseinheiten umfasst,
- Fig. 3: eine schematische Draufsicht einer beispielhaften Ausführungsform einer sogenannten offenen Absorptionskältemaschine ohne Desorber und ohne Kondensator,
- Fig. 4: eine schematische Draufsicht einer weiteren Ausführungsform der erfindungsgemäßen Absorptionskältemaschine mit einer integrierten Verdampfer-/Absorbereinheit und einer integrierten Desorber-/Kondensatoreinheit und
- Fig. 5: eine schematische Draufsicht einer erfindungsgemäßen Ausführungsform einer sogenannten offenen Absorptionskältemaschine ohne Desorber und ohne Kondensator und mit einer integrierten Verdampfer/Absorbereinheit gemäß Fig. 4.

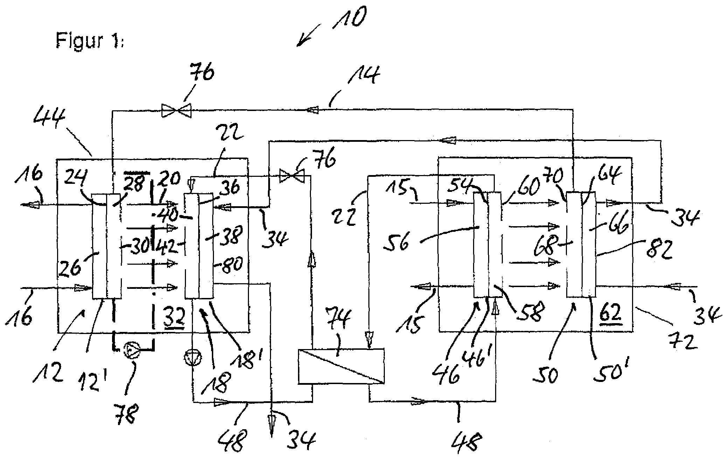

Fig. 1 zeigt in schematischer Darstellung eine beispielhafte Ausführungsform einer Absorptionskältemaschine 10 mit einem Verdampfer 12 zum Verdampfen eines Kältemittels 14 unter Aufnahme von Wärme aus einem Kälteträgerkreislauf 16 und einem Absorber 18 zur Absorption des Kältemitteldampfes 20 durch das aufkonzentrierte, kältemittelarme Arbeitsstoffpaar 22.

Der Verdampfer 12 umfasst wenigstens eine Verdampfungseinheit 12' mit einem vom Kälteträger 16 durchströmten, zumindest teilweise von einer wärmeleitenden, dampf- und flüssigkeitsdichten Wand 24 begrenzten Kälteträgerkanal 26 und wenigstens einen an die wärmeleitende Wand 24 angrenzenden, vom Kältemittel 14 beaufschlagten Kältemittelkanal 28, der auf seiner der wärmeleitenden Wand 24 gegenüberliegenden Seite durch eine dampfdurchlässige, flüssigkeitsdichte Membranwand 30 von einem Dampfraum 32 getrennt ist.

Der Absorber 18 umfasst wenigstens eine Absorptionseinheit 18' mit einem von einem Kühlmittel 34 durchströmten, zumindest teilweise von einer wärmeleitenden, dampf- und flüssigkeitsdichten Wand 36 begrenzten Kühlmittelkanal 38 und wenigstens einem an die wärmeleitende Wand 36 angrenzenden Absorptionskanal 40, dem das aufkonzentrierte, kältemittelarme Arbeitsstoffpaar 22 zugeführt und der über eine auf seiner der wärmeleitenden Wand 36 gegenüberliegenden Seite vorgesehene dampfdurchlässige, flüssigkeitsdichte Membranwand 42 mit Kältemitteldampf 20 aus dem Dampfraum 32 beaufschlagt wird.

Der Verdampfer 12 und der Absorber 18 sind in einem gemeinsamen, den Dampfraum 32 umfassenden Gehäuse 44 untergebracht.

Im vorliegenden Fall umfasst die Absorptionskältemaschine 10 ferner einen Desorber 46 zur Desorption des Kältemittels aus dem kältemittelreichen Arbeitsstoffpaar 48 und einen Kondensator 50 zur Kondensation des Kältemittels 14 mit anschließender Entspannung.

Der Desorber 46 umfasst wenigstens eine Desorptionseinheit 46' mit einem von einem Heizmittel 15 durchströmten, zumindest teilweise von einer wärmeleitenden, dampf- und flüssigkeitsdichten Wand 54 begrenzten Heizmittelkanal 56 und wenigstens einem an die wärmeleitende Wand 54 angrenzenden, vom kältemittelreichen Arbeitsstoffpaar 48 beaufschlagten Desorptionskanal 58, der auf seiner der wärmeleitenden Wand 54 gegenüberliegenden Seite durch eine dampfdurchlässige, flüssigkeitsdichte Membranwand 60 von einem weiteren Dampfraum 62 getrennt ist.

Der Kondensator 50 umfasst wenigstens eine Kondensationseinheit 50' mit einem von einem Kühlmittel 34 durchströmten, zumindest teilweise von einer wärmeleitenden, dampf- und flüssigkeitsdichten Wand 64 begrenzten Kühlmittelkanal 66 und wenigstens einem an die wärmeleitende Wand 64 angrenzenden Kondensationskanal 68, der über eine auf seiner der wärmeleitenden Wand 66 gegenüberliegenden Seite vorgesehene dampfdurchlässige, flüssigkeitsdichte Membranwand 70 mit Dampf aus dem weiteren Dampfraum 62 beaufschlagt wird.

Sowohl im ersten Dampfraum 32 als auch im weiteren Dampfraum 62 herrscht jeweils Unterdruck vor, wobei vorzugsweise der Druck im weiteren Dampfraum 62 größer ist als der im ersten Dampfraum 32.

Der Verdampfer 12 und der Absorber 18 einerseits und der Desorber 46 und der Kondensator 50 andererseits sind in zwei getrennten, den ersten bzw. den weiteren Dampfraum 32, 62 umfassenden Gehäusen 44, 72 untergebracht.

Im vorliegenden Fall ist für den Absorber 18 und den Kondensator 50 eine gemeinsamer Kühlmittelkreislauf 34 vorgesehen.

In einem Lösungswärmetauscher 74 kann eine Wärmeübertragung zur Abkühlung des aus dem Desorber 46 kommenden heißen aufkonzentrierten, kältemittelarmen Arbeitsstoffpaares erfolgen. Das vom Desorber 46 kommende aufkonzentrierte, kältemittelarme Arbeitsstoffpaar 22 wird im Lösungswärmetauscher 74 abgekühlt. Gleichzeitig wird das in den Desorber 46 eintretende kältemittelreiche Arbeitsstoffpaar 48 vorgewärmt. Durch den Lösungswärmetauscher 74 wird der Energiebedarf zur Desorption des Kältemittels im Desorber 46 verringert.

Wie anhand der Fig. 1 zu erkennen ist, kann zwischen dem Kondensationskanal 68 des Kondensators 50 und dem Kältemittelkanal 28 des Verdampfers 12 sowie zwischen dem Lösungswärmetauscher 74 und dem Absorptionskanal 40 des Absorbers 18 jeweils eine Drossel 76 vorgesehen sein.

Das Arbeitspaar kann insbesondere Wasser als Kältemittel und eine LiBr-Lösung als Salzlösung umfassen. Bei dem Kälteträger 16 kann es sich insbesondere um Kaltwasser handeln.

Bei dem Heizmittel 15 kann es sich insbesondere um Heißwasser handeln. Als Kühlmittel 34 kann insbesondere Kühlwasser vorgesehen sein.

Bei dem Kälteträger 16 bzw. Kaltwasser handelt es sich um das Produkt.

Verdampfer 12, Absorber 18, Desorber 46 und Kondensator 50 können jeweils unter Verwendung von Rahmenelementen mit jeweils wenigstens einer wärmeleitenden Folie und/oder wenigstens einer Membran aufgebaut werden. Da vorzugsweise nur Kunststoffe verwendet werden, ist ein geringer Sauerstoffgehalt im System völlig unschädlich.

Die Absorptionskältemaschine 10 kann also insbesondere einen Verdampfer 12, einen Absorber 18, einen Desorber 46 und einen Kondensator 50 umfassen. Der Verdampfer 12 umfasst einen Kälteträgerkanal 26, in dem der abzukühlende Kälteträger 16 strömt, und einen Kältemittelkanal 28, der auf der einen Seite über eine wärmeleitende, flüssigkeitsdichte Wand 24 zum Kälteträger 16 benachbart ist und auf der der wärmeleitenden Wand 24 gegenüberliegenden Seite über eine dampfdurchlässige, flüssigkeitsdichte Membranwand 30 vom ersten Dampfraum 32 getrennt ist. Der Druck im ersten Gehäuse 32 ist so weit abgesenkt, dass an der wärmeleitenden Wand 24 im Kältemittelkanal 28 Dampf durch die Abkühlung des Kälteträgers 16 entsteht und dieser Dampf durch die dampfdurchlässige, flüssigkeitsdichte Membran 30 in den ersten Dampfraum 32 tritt, der der ersten Membranwand 30 gegenüberliegend eine dem Absorber 18 zugeordnete zweite Membranwand 42 enthält. Das Kältemittel 14, zum Beispiel Wasser, kann durch den Kältemittelkanal 28 des Verdampfers 12 im Überschuss strömen, das heißt durch den Kältemittelkanal 28 kann mehr Wasser strömen als verdampft wird. In diesem Fall kann eine Pumpe 78 zur Rückführung des Überschusswassers in den Verdampfer 12 vorgesehen sein.

Der Absorber 18 kann einen vom aufkonzentrierten, kältemittelarmen Arbeitsstoffpaar 22 beaufschlagten Absorptionskanal 40 umfassen, der zum ersten Dampfraum 32 von der dampfdurchlässigen, flüssigkeitsdichten Membranwand 42 und der Membranwand 42 gegenüberliegend von einer wärmeleitenden, dampf- und flüssigkeitsdichten Wand 36 begrenzt ist, an die sich ein Kühlmittelkanal 38 für das Kühlmittel 34 anschließt, der mit einer weiteren Wand 80 zum Innern des ersten Gehäuses 44 abgeschlossen ist.

Im zweiten Gehäuse 72 befinden sich weitere Hauptkomponenten der Absorptionskältemaschine 10, nämlich der Desorber 46 und der Kondensator 50. In beiden Gehäusen 44, 72 herrscht Unterdruck, wobei der Druck im zweiten Gehäuse 72 größer ist als der im ersten Gehäuse 44.

Der Desorber 46 kann aus zwei Kanälen aufgebaut sein, wobei in einem Heizmittelkanal 56 das Heizmittel 15 strömt und dieser Heizmittelkanal 56 zu einem Desorptionskanal 58 durch eine wärmeleitende, dampf- und flüssigkeitsdichte Wand 64 begrenzt ist. Der sich auf der anderen Seite an diese wärmeleitende, dampf- und flüssigkeitsdichte Wand 54 anschließende Desorptionskanal 58 ist durch eine der wärmeleitenden Wand 54 gegenüberliegende dampfdurchlässige, flüssigkeitsdichte Membran 60 zum weiteren Dampfraum 62 abgeschlossen.

Über den zweiten Dampfraum 62 benachbart ist der Kondensator 50 vorgesehen, der ebenfalls wieder zwei Kanäle 66, 68 umfasst. So schließt sich an die dem zweiten Dampfraum 62 benachbarte dampfdurchlässige, flüssigkeitsdichte Membranwand 70 des Kondensators 50 der Kondensationskanal 68 für den kondensierenden Dampf an. Dieser Kondensationskanal 68 ist auf der der Membranwand 70 gegenüberliegenden Seite durch eine wärmeleitende, dampf- und flüssigkeitsdichte Wand 64 begrenzt. An diese wärmeleitende Wand 64 schließt sich unmittelbar der Kühlmittelkanal 66 an, der mit einer weiteren Wand 82 zum Innern des zweiten Gehäuses 72 abgeschlossen ist.

Der Lösungswärmetauscher 74 in der Salzlösungsleitung kühlt das heiße, aufkonzentrierte kältemittelarme Arbeitsstoffpaar 22 aus dem Desorber 46 gegen das kalte kältemittelreiche Arbeitsstoffpaar 48 aus dem Absorber 18 ab. Über Pumpen und Drosseln werden auf dem Fachmann allgemein bekannte Art und Weise die Druckunterschiede in der Absorptionskältemaschine ausgeglichen. Die Absorptionskältemaschine kann insbesondere mit Kühlwasser und Heißwasser versorgt werden. Anstelle von Wasser kann jedoch auch ein anderes Medium die Funktionen Heizen und Kühlen übernehmen.

Bei der Ausführungsform gemäß Fig. 1 umfassen der Verdampfer 12, der Absorber 18, der Desorber 46 und der Kondensator 50 jeweils nur eine Verdampfungseinheit 12', Absorptionseinheit 18', Desorptionseinheit 46' bzw. Kondensationseinheit 50'.

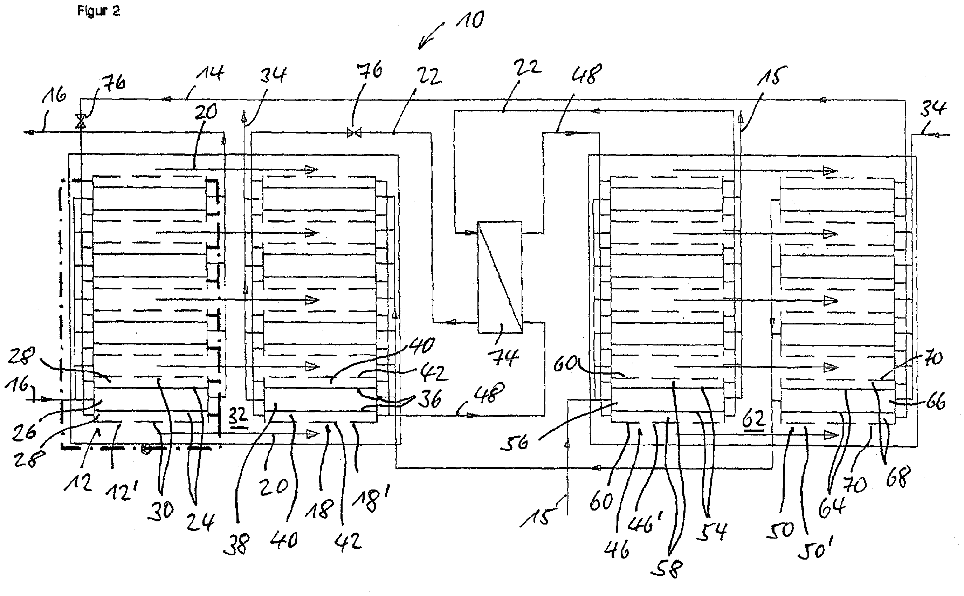

Fig. 2 zeigt in schematischer Draufsicht eine weitere beispielhafte Ausführungsform einer Absorptionskältemaschine 10, die sich von der der Fig. 1 im Wesentlichen dadurch unterscheidet, dass der Verdampfer 12, der Absorber 18, der Desorber 46 und der Kondensator 50 jeweils mehrere Verdampfungseinheiten 12', mehrere Absorptionseinheiten 18', mehrere Desorptionseinheiten 46' bzw. mehrere Kondensationseinheiten 50' umfasst.

Zudem weisen die Verdampfungseinheiten 12' im vorliegenden Fall auf wenigstens zwei einander gegenüberliegenden Seiten des Kälteträgerkanals 26 jeweils einen von diesem durch eine wärmeleitende, dampf- und flüssigkeitsdichte Wand 24 getrennten Kältemittelkanal 28 auf, der auf seiner der wärmeleitenden Wand 24 gegenüberliegenden Seite durch eine dampfdurchlässige, flüssigkeitsdichte Membranwand 30 vom ersten Dampfraum 32 getrennt ist.

Wie aus der Fig. 2 ersichtlich, kann auch wenigstens eine Absorptionseinheit 18' vorgesehen sein, die auf wenigstens zwei einander gegenüberliegenden Seiten des Kühlmittelkanals 38 jeweils einen von diesem durch eine wärmeleitende, dampf- und flüssigkeitsdichte Wand 36 getrennten Absorptionskanal 40 aufweist, der über eine auf seiner der wärmeleitenden Wand 36 gegenüberliegenden Seite vorgesehene dampfdurchlässige, flüssigkeitsdichte Membranwand 42 mit Dampf aus dem ersten Dampfraum 32 beaufschlagt wird.

Überdies kann auch wenigstens eine Desorptionseinheit 46' vorgesehen sein, die auf wenigstens zwei einander gegenüberliegenden Seiten des Heizmittelkanal 56 jeweils einen von diesem durch eine wärmeleitende, dampf- und flüssigkeitsdichte Wand 54 getrennten Desorptionskanal 58 aufweist, der auf seiner der wärmeleitenden Wand 54 gegenüberliegenden Seite durch eine dampfdurchlässige, flüssigkeitsdichte Membranwand 60 vom weiteren Dampfraum 62 getrennt ist.

Schließlich kann auch wenigstens eine Kondensationseinheit 50' vorgesehen sein, die auf wenigstens zwei einander gegenüberliegenden Seiten des Kühlmittelkanals 66 jeweils einen von diesem durch eine wärmeleitende, dampf- und flüssigkeitsdichte Wand 64 getrennten Kondensationskanal 68 aufweist, der über eine auf seiner der wärmeleitenden Wand 64 gegenüberliegenden Seite vorgesehene dampfdurchlässige, flüssigkeitsdichte Membranwand 70 mit Dampf aus dem weiteren Dampfraum 62 beaufschlagt wird.

Beim vorliegenden, in der Fig. 2 dargestellten Ausführungsbeispiel sind die verschiedenen Einheiten 12', 18', 46' und 50' des Verdampfers 12, des Absorbers 18, des Desorbers 46 und des Kondensators 50 jeweils beispielsweise horizontal nebeneinander angeordnet.

Beim vorliegenden Ausführungsbeispiel sind die Kanäle also vervielfacht, um frei skalierbar größere Flächen und damit einhergehend größere Kälteleistungen erzielen zu können. Im Übrigen besitzt die in der Fig. 2 dargestellte Absorptionskältemaschine zumindest im Wesentlichen den gleichen Aufbau wie die der Fig. 1, wobei einander entsprechenden Teilen gleiche Bezugszeichen zugeordnet sind.

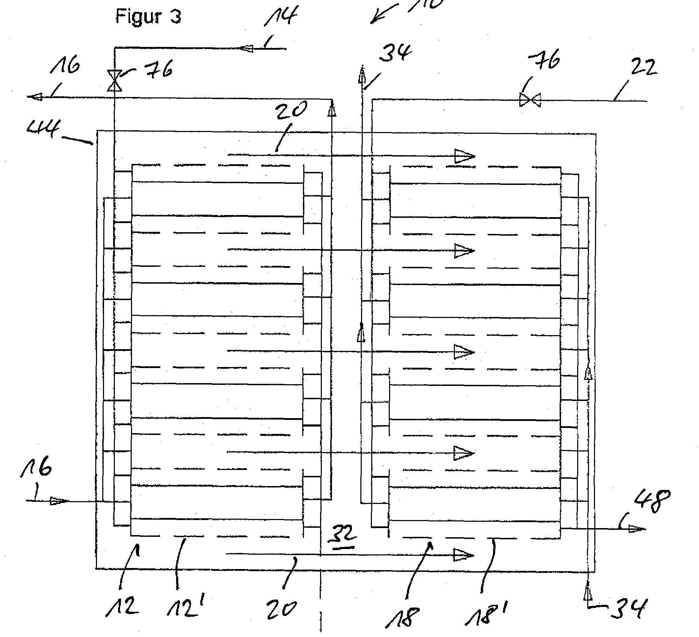

Fig. 3 zeigt in schematischer Draufsicht eine beispielhafte Ausführungsform einer sogenannten offenen Absorptionskältemaschine 10 ohne Desorber und ohne Kondensator. Dabei umfasst die Absorptionskältemaschine 10 nur ein Gehäuse 44, das einen Verdampfer 12 und einen Absorber 18 enthält. Im Gehäuse 44 herrscht Unterdruck. Zugeführt wird dieser offenen Absorptionskältemaschine 10 das das Kältemittel 14, zum Beispiel Wasser, und die Salzlösung, zum Beispiel LiBr-Lösung, umfassende Arbeitsstoffpaar. Aus dem Arbeitsstoffpaar entsteht verdünnte Salzlösung, die extern zur Wiederaufbereitung gegeben werden kann. Zum Betrieb wird die Absorptionskältemaschine wieder mit einer Kühlseite verbunden.

Im vorliegenden Fall besitzen der Verdampfer 12 und der Absorber 18 zumindest im Wesentlichen wieder den gleichen Aufbau wie der Verdampfer 12 und der Absorber 18 gemäß Fig. 2, wobei einander entsprechenden Teilen gleiche Bezugszeichen zugeordnet sind.

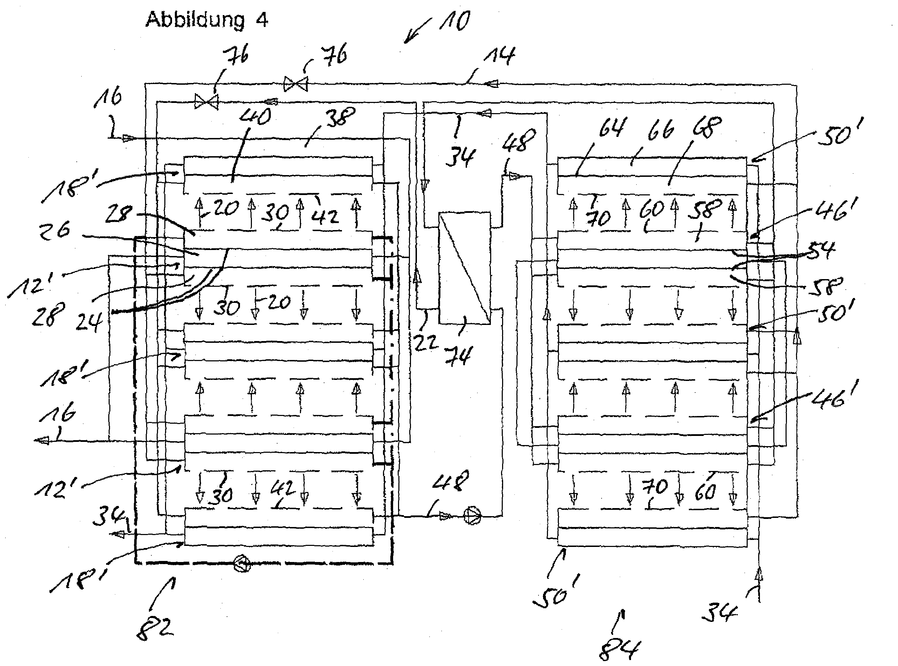

Fig. 4 zeigt in schematischer Draufsicht eine weitere Ausführungsform der erfindungsgemäßen Absorptionskältemaschine 10 mit einer integrierten Verdampfer-/Absorbereinheit 82 und einer integrierten Desorber-/Kondensatoreinheit 84.

Dabei ist zur Bildung der integrierten Verdampfer-/ Absorbereinheit 82 in einer aufeinanderfolgenden Anordnung von mehreren Verdampfungs- und Absorptionseinheiten abwechselnd jeweils eine Verdampfungseinheit 12' und eine Absorptionseinheit 18' vorgesehen, wobei ein jeweiliges Paar von unmittelbar aufeinanderfolgenden Verdampfungs- und Absorptions- bzw. Absorptions- und Verdampfungseinheiten einander zugewandte dampfdurchlässige, flüssigkeitsdichte Membranwände 30, 42 aufweist. Im vorliegenden Fall sind die Verdampfungs- und Absorptionseinheiten 12, 12' beispielsweise horizontal nebeneinander angeordnet, wobei an den beiden Enden jeweils eine einen Kühlmittelkanal 38 und einen Absorptionskanal 40 aufweisende Absorptionseineit 18' und dazwischen wenigstens eine Verdampfungseinheit 12' und wenigstens eine Absorptionseinheit 18' vorgesehen sein können. Die zwischen den beiden endseitigen Absorptionseinheiten 18' vorgesehenen Einheiten 12', 18' können jeweils wieder drei Kanäle aufweisen, wie dies bei den entsprechenden Einheiten 12', 18' gemäß Fig. 2 der Fall ist.

Zur Bildung einer integrierten Desorber-/Kondensatoreinheit 84 kann in einer aufeinanderfolgenden Anordnung von mehreren Desorptions- und Kondensationseinheiten abwechselnd jeweils eine Desorptionseinheit 46' und eine Kondensationseinheit 50' vorgesehen sein, wobei ein jeweiliges Paar von unmittelbar aufeinanderfolgenden Desorptions- und Kondensations- bzw. Kondensations- und Desorptionseinheiten einander zugewandte dampfdurchlässige, flüssigkeitsdichte Membranwände 60, 70 aufweist. Im vorliegenden Fall sind die Desorptions- und Kondensationseinheiten 46', 50' der integrierten Desorber-/Kondensatoreinheit 84 beispielsweise horizontal nebeneinander angeordnet, wobei an den beiden Enden beispielsweise jeweils eine Kondensationseinheit 50 und dazwischen wenigstens eine Desorptionseinheit 46' und/oder wenigstens eine Kondensationseinheit 50' angeordnet sind. Wie anhand der Fig. 4 zu erkennen ist, können die zwischen den endseitigen Kondensationseinheiten 50 angeordneten Einheiten 46', 50' jeweils wieder drei Kanäle umfassen, wie dies bei den Desorptions- und Kondensationseinheiten 46', 50' gemäß Fig. 2 der Fall ist.

Die hohe Integration dieser Ausführungsform gemäß Fig. 4 wird insbesondere dadurch ermöglicht, dass alle Flüssigkeitsströme in Kanälen geführt sind, die von dampfdurchlässigen, flüssigkeitsdichten Membranen und wärmeaustauschenden Wänden begrenzt sind. Die integrierte Verdampfer-/Absorbereinheit 82 und die integrierte Desorber-/Kondensatoreinheit 84 sind jeweils durch eine entsprechende Aufeinanderfolge von Rahmenelementen mit dampfdurchlässigen, flüssigkeitsdichten Membranen und wärmeaustauschenden Wänden bzw. Folien realisierbar. So entstehen Kanäle für den Kälteträger bzw. das Kaltwasser, die konzentrierte und verdünnte Salzlösung und für den Dampf. Die integrierte Verdampfer-/Absorbereinheit 82 und die integrierte Desorber-/Kondensatoreinheit 84 befinden sich wieder in getrennten Gehäusen (nicht dargestellt).

In der Verdampfer-/Absorbereinheit 82 und in der Desorber-/Kondensatoreinheit 84 liegen für die Verdampfung und die Kondensation die Funktionsflächen und -kanäle vorzugsweise einander unmittelbar gegenüber.

Dabei ist in der integrierten Verdampfer-/Absorbereinheit 82 ein jeweiliger Kältemittelkanal 28 einer jeweiligen Verdampfungseinheit 12' mit seiner die Membranwand 30 aufweisenden Seite gegenüber einer die Membranwand 42 aufweisenden Seite eines Absorptionskanals 40 einer jeweiligen Absorptionseinheit 18' angeordnet.

In der integrierten Desorber-/Kondensatoreinheit 84 ist ein jeweiliger Desorptionskanal 58 einer jeweiligen Desorptionseinheit 46' mit seiner die Membranwand 60 aufweisenden Seite gegenüber einer die Membranwand 70 aufweisenden Seite eines Kondensationskanals 68 einer jeweiligen Kondensationseinheit 50' angeordnet.

Im Übrigen kann die Absorptionskältemaschine 10 gemäß Fig. 4 zumindest im Wesentlichen wieder so aufgebaut sein, wie die gemäß Fig. 2, wobei einander entsprechenden Teilen gleiche Bezugszeichen zugeordnet sind.

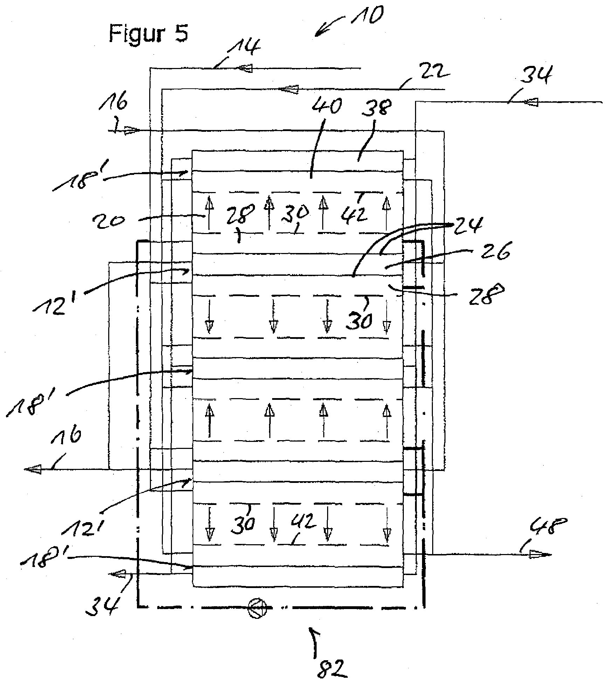

Fig. 5 zeigt in schematischer Draufsicht eine erfindungsgemäße Ausführungsform einer sogenannten offenen Absorptionskältemaschine 10 ohne Desorber und ohne Kondensator mit einer integrierten Verdampfer-/Absorbereinheit 82. Dabei besitzt die integrierte Verdampfer-/Absorbereinheit 82 zumindest im Wesentlichen denselben Aufbau wie die der Absorptionskältemaschine 10 gemäß Fig. 4. Einander entsprechenden Teilen sind gleiche Bezugszeichen zugeordnet.

Der Druck im Dampfraum 32 wird bei den verschiedenen Ausführungsformen bevorzugt jeweils so weit abgesenkt, dass an der wärmeleitenden, dampf- und flüssigkeitsdichten Wand 24 im Kältemittelkanal 26 einer jeweiligen Verdampfungseinheit 12' Dampf durch Abkühlung des Kälteträgers 16 entsteht und dieser Dampf durch die dampfdurchlässige, flüssigkeitsdichte Membranwand 30 in den Dampfraum 32 eintritt, über den der Absorptionskanal 40 einer jeweiligen Absorptionseinheit 18' mit Dampf beaufschlagt wird.

Die verschiedenen Kanäle einschließlich der diese begrenzenden wärmeleietenden, dampf- und flüssigkeitsdichten Wände bzw. dampfdurchlässigen, flüssigkeitsdichten Membranwände bestehen bevorzugt ausschließlich aus Kunststoff. Dabei können die Verdampfungs-, Absorptions-, Desorptions- und Kondensationseinheiten 12', 18', 46', 15' bzw. die integrierten Verdampfer-/Absorber- und Desorber-/Kondensatoreinheiten 82, 84 insbesondere aus den bereits erwähnten Rahmenelementen mit jeweils wenigstens einer wärmeleitenden Folie und/oder wenigstens einer Membran aufgebaut sein.

### Bezugszeichenliste

- 10: Absorptionskältemaschine
- 12: Verdampfer
- 12': Verdampfungseinheit
- 14: Kältemittel
- 15: Heizmittel
- 16: Kälteträger, Kälteträgerkreislauf
- 18: Absorber
- 18': Absorptionseinheit
- 20: Kältemitteldampf
- 22: aufkonzentriertes, kältemittelarmes Arbeitsstoffpaar
- 24: wärmeleitende, flüssigkeitsdichte Wand
- 26: Kälteträgerkanal
- 28: Kältemittelkanal
- 30: dampfdurchlässige, flüssigkeitsdichte Membranwand
- 32: Dampfraum
- 34: Kühlmittel, Kühlmittelkreislauf
- 36: wärmeleitende, dampf- und flüssigkeitsdichte Wand
- 38: Kühlmittelkanal
- 40: Absorptionskanal
- 42: dampfdurchlässige, flüssigkeitsdichte Membranwand
- 44: Gehäuse
- 46: Desorber
- 46': Desorptionseinheit
- 48: kältemittelreiches Arbeitsstoffpaar
- 50: Kondensator
- 50': Kondensationseinheit
- 52: Heizmittel
- 54: wärmeleitende, dampf- und flüssigkeitsdichte Wand
- 56: Heizmittelkanal
- 58: Desorptionskanal
- 60: dampfdurchlässige, flüssigkeitsdichte Membranwand
- 62: weiterer Dampfraum
- 64: wärmeleitende, dampf- und flüssigkeitsdichte Wand
- 66: Kühlmittelkanal
- 68: Kondensationskanal
- 70: dampfdurchlässige, flüssigkeitsdichte Membranwand
- 72: Gehäuse
- 74: Lösungswärmetauscher
- 76: Drossel
- 78: Pumpe
- 80: Wand
- 82: integrierte Verdampfer-/Absorbereinheit
- 84: integrierte Desorber-/Kondensatoreinheit

## Patentansprüche

1. Absorptionskältemaschine (10) mit einem Verdampfer (12) zum Verdampfen eines Kältemittels (14) unter Aufnahme von Wärme aus einem Kälteträgerkreislauf (16) und einem Absorber (18) zur Absorption des Kältemitteldampfes (20) durch das aufkonzentrierte, kältemittelarme Arbeitsstoffpaar (22), wobei
der Verdampfer (12) mehrere Verdampfungseinheiten (12') aufweist, die jeweils einen Kälteträgerkanal (26), der vom Kälteträger (16) durchströmt zumindest teilweise von einer wärmeleitenden, dampf- und flüssigkeitsdichten Wand (24) begrenzt ist, und wenigstens einen Kältemittelkanal (28) aufweisen, der an die wärmeleitende Wand (24) angrenzt und vom Kältemittel (14) beaufschlagt ist, wobei der Kältemittelkanal (28) auf seiner der wärmeleitenden Wand (24) gegenüberliegenden Seite durch eine dampfdurchlässige, flüssigkeitsdichte Membranwand (30) von einem Dampfraum (32) getrennt ist, und
der Absorber (18) mehrere Absorptionseinheiten (18') aufweist, die jeweils einen Kühlmittelkanal, der von einem Kühlmittel (34) durchströmt und zumindest teilweise von einer wärmeleitenden, dampf- und flüssigkeitsdichten Wand (36) begrenzt ist, und wenigstens einen Absorptionskanal (40) aufweisen, der an die wärmeleitende Wand angrenzt, wobei dem Absorptionskanal (40) das aufkonzentrierte, kältemittelarme Arbeitsstoffpaar (22) zugeführt wird und wobei der Absorptionskanal (40) über eine dampfdurchlässige, flüssigkeitsdichte Membranwand (42), die auf seiner der wärmeleitenden Wand (36) gegenüberliegenden Seite vorgesehen ist, mit Kältemitteldampf (20) aus dem Dampfraum (32) beaufschlagt wird,
**dadurch gekennzeichnet, dass**
zur Bildung einer integrierten Verdampfer-/Absorbereinheit (82) in einer aufeinanderfolgenden Anordnung der mehreren Verdampfungs- und Absorptionseinheiten abwechselnd jeweils eine Verdampfungseinheit (12') und eine Absorptionseinheit (18') vorgesehen ist, wobei
ein jeweiliges Paar von unmittelbar aufeinanderfolgenden Verdampfungs- und Absorptionseinheiten bzw. Absorptions- und Verdampfungseinheiten einander zugewandte dampfdurchlässige, flüssigkeitsdichte Membranwände (30, 42) aufweist,
die zwischen zwei Absorptionseinheiten (18') angeordneten Verdampfungseinheiten (12') jeweils auf wenigstens zwei einander gegenüberliegenden Seiten des Kälteträgerkanals (26) jeweils einen Kältemittelkanal (28) aufweisen, der von dem zugeordneten Kälteträgerkanal (26) durch eine wärmeleitende, dampf- und flüssigkeitsdichte Wand (24) getrennt ist, wobei der Kältemittelkanal (28) auf seiner der wärmeleitenden Wand (24) gegenüberliegenden Seite durch eine dampfdurchlässige, flüssigkeitsdichte Membranwand (30) vom Dampfraum (32) getrennt ist, und
die zwischen zwei Verdampfungseinheiten (12') angeordneten Absorptionseinheiten (18') jeweils auf wenigstens zwei einander gegenüberliegenden Seiten des Kühlmittelkanals (38) jeweils einen Absorptionskanal (40) aufweisen, der von dem Kühlmittelkanal (38) durch eine wärmeleitende, dampf- und flüssigkeitsdichte Wand (36) getrennt ist, wobei der Absorptionskanal (40) über eine dampfdurchlässige, flüssigkeitsdichte Membranwand (42), die auf einer der wärmeleitenden Wand (36) gegenüberliegenden Seite des Absorptionskanals (40) vorgesehen ist, mit Dampf aus dem Dampfraum (32) beaufschlagt wird.

2. Absorptionskältemaschine nach Anspruch 1, wobei der Druck im Dampfraum (32) so weit abgesenkt ist, dass an der wärmeleitenden, dampf- und flüssigkeitsdichten Wand (24) im Kältemittelkanal (26) einer jeweiligen Verdampfungseinheit (12') Dampf durch Abkühlung des Kälteträgers (16) entsteht und dieser Dampf durch die dampfdurchlässige, flüssigkeitsdichte Membranwand (30) in den Dampfraum (32) eintritt, über den der Absorptionskanal (40) einer jeweiligen Absorptionseinheit (18') mit Dampf beaufschlagt wird.

3. Absorptionskältemaschine nach einem der vorhergehenden Ansprüche, wobei der Verdampfer (12) und der Absorber (18) in einem gemeinsamen, den Dampfraum (32) umfassenden Gehäuse (44) untergebracht sind.

4. Absorptionskältemaschine nach einem der vorhergehenden Ansprüche, weiterhin umfassend
einen Desorber (46) zur Desorption des Kältemittels aus dem kältemittelreichen Arbeitsstoffpaar (48) und
einen Kondensator (50) zur Kondensation des Kältemittels (14) mit anschließender Entspannung.

5. Absorptionskältemaschine nach Anspruch 4, wobei
der Desorber (46) wenigstens eine Desorptionseinheit (46') mit einem Heizmittelkanal (56), der von einem Heizmittel (15) durchströmt und zumindest teilweise von einer wärmeleitenden, dampf- und flüssigkeitsdichten Wand (54) begrenzt ist, und mit wenigstens einem Desorptionskanal (58) umfasst, der an die wärmeleitende Wand (54) angrenzt und vom kältemittelreichen Arbeitsstoffpaar (48) beaufschlagt ist, wobei der Desorptionskanal (58) auf seiner der wärmeleitenden Wand (54) gegenüberliegenden Seite durch eine dampfdurchlässige, flüssigkeitsdichte Membranwand (60) von einem weiteren Dampfraum (62) getrennt ist, und
der Kondensator (50) wenigstens eine Kondensationseinheit (50') mit einem Kühlmittelkanal (66), der von einem Kühlmittel (34) durchströmt und zumindest teilweise von einer wärmeleitenden, dampf- und flüssigkeitsdichten Wand (64) begrenzt ist, und mit wenigstens einem Kondensationskanal (68) umfasst, der an die wärmeleitende Wand (64) angrenzt, wobei der Kondensationskanal (68) über eine Membranwand (70), die auf seiner der wärmeleitenden Wand (66) gegenüberliegenden Seite vorgesehen ist, mit Dampf aus dem weiteren Dampfraum (62) beaufschlagt wird.

6. Absorptionskältemaschine nach Anspruch 5, wobei der Desorber (46) mehrere Desorptionseinheiten (46') umfasst.

7. Absorptionskältemaschine nach Anspruch 5 oder 6, wobei der Kondensator (50) mehrere Kondensationseinheiten (50') umfasst.

8. Absorptionskältemaschine nach einem der vorhergehenden Ansprüche, wobei wenigstens eine Desorptionseinheit (46') vorgesehen ist, die auf wenigstens zwei einander gegenüberliegenden Seiten des Heizmittelkanals (56) jeweils einen Desorptionskanal (58) aufweist, der von dem Heizmittelkanal (56) durch eine wärmeleitende, dampf- und flüssigkeitsdichte Wand (54) getrennt ist, wobei der Desorptionskanal (58) auf seiner der wärmeleitenden Wand (54) gegenüberliegenden Seite durch eine dampfdurchlässige, flüssigkeitsdichte Membranwand (60) vom weiteren Dampfraum (62) getrennt ist.

9. Absorptionskältemaschine nach einem der vorhergehenden Ansprüche, wobei wenigstens eine Kondensationseinheit (50') vorgesehen ist, die auf wenigstens zwei einander gegenüberliegenden Seiten des Kühlmittelkanals (66) jeweils einen Kondensationskanal (68) aufweist, der von dem Kühlmittelkanal (66) durch eine wärmeleitende, dampf- und flüssigkeitsdichte Wand (64) getrennt ist, wobei der Kondensationskanal (68) über eine dampfdurchlässige, flüssigkeitsdichte Membranwand (70), der auf einer der wärmeleitenden Wand (64) gegenüberliegenden Seite des Kondensationskanals (68) vorgesehen ist, mit Dampf aus dem weiteren Dampfraum (62) beaufschlagt wird.

10. Absorptionskältemaschine nach einem der vorhergehenden Ansprüche, wobei sowohl im ersten Dampfraum (32) als auch im weiteren Dampfraum (62) Unterdruck vorherrscht, wobei vorzugsweise der Druck im weiteren Dampfraum (62) größer ist als im ersten Dampfraum (32).

11. Absorptionskältemaschine nach einem der vorhergehenden Ansprüche, wobei der Verdampfer (12) und der Absorber (18) einerseits und der Desorber (46) und der Kondensator (50) andererseits in zwei getrennten Gehäusen (44 , 72) untergebracht sind, die den ersten bzw. den weiteren Dampfraum (32 , 62) umfassen.

12. Absorptionskältemaschine nach einem der vorhergehenden Ansprüche, wobei zur Bildung einer integrierten Desorber-/Kondensatoreinheit (84) in einer aufeinanderfolgenden Anordnung von mehreren Desorptions- und Kondensationseinheiten abwechselnd jeweils eine Desorptionseinheit (46') und eine Kondensationseinheit (50') vorgesehen ist, wobei ein jeweiliges Paar von unmittelbar aufeinanderfolgenden Desorptions- und Kondensationseinheiten bzw. Kondensations- und Desorptionseinheiten vorzugsweise einander zugewandte dampfdurchlässige, flüssigkeitsdichte Membranwände (60, 70) aufweist.

13. Absorptionskältemaschine nach einem der vorhergehenden Ansprüche, wobei für den Absorber (18) und den Kondensator (50) ein gemeinsamer Kühlmittelkreislauf (34) vorgesehen ist.

14. Absorptionskältemaschine nach einem der vorhergehenden Ansprüche, wobei die verschiedenen Kanäle einschließlich der diese begrenzenden wärmeleitenden, dampf- und flüssigkeitsdichten Wände bzw. dampfdurchlässigen, flüssigkeitsdichten Membranwände aus Kunststoff bestehen.

## Claims

1. An absorption refrigeration machine (10) with an evaporator (12) for evaporation of a refrigerant (14) absorbing heat from a coolant circuit (16) and an absorber (18) for absorbing the refrigerant vapor (20) through the concentrated, low-refrigerant pair (22) of working substances, wherein
the evaporator (12) comprises several evaporation units (12'), each having a coolant channel (26), through which the coolant (16) flows and which is delimited at least in part by a heat-conducting, vapor- and liquid-tight wall (24), and having at least one refrigerant channel (28) that adjoins the heat-conducting wall (24) and is loaded with the refrigerant (14), wherein the refrigerant channel (28) is separated from a vapor chamber (32) by a vapor-permeable, liquid-tight membrane wall (30) on the side of the refrigerant channel opposite the heat-conducting wall (24), and
the absorber (18) comprises several absorption units (18'), each having a cooling-medium channel, through which a cooling medium (34) flows and which is delimited at least in part by a heat-conducting, vapor- and liquid-tight wall (36) and at least one absorption channel (40) that adjoins the heat conducting wall, wherein the concentrated, low-refrigerant pair (22) of working substances is fed to the absorption channel (40) and wherein the absorption channel (40) is loaded with refrigerant vapor (20) from the vapor chamber (32) via a vapor-permeable, liquid-tight membrane wall (42) provided on the side of the absorption channel opposite the heat-conducting wall (36),
**characterized in that**
in each case an evaporating unit (12') and an absorption unit (18') are provided on a rotating basis for the formation of an integrated evaporating/absorption unit (82) in a sequential arrangement of several evaporating and absorption units, wherein
a respective pair of succeeding evaporating and absorption units or absorption and evaporating units has vapor-permeable, liquid-tight membrane walls (30, 42) facing each another,
the evaporating units (12') arranged between two absorption units (18') in each case have a refrigerant channel (28) in each case on at least two sides of the coolant channel (26) opposite each other, said refrigerant channel being separated from the assigned coolant channel (26) by a heat-conducting, vapor and liquid-tight wall (24), wherein the refrigerant channel (28) is separated from the vapor chamber (32) on its side opposite the heat-conducting wall (24) by a vapor-permeable, liquid-tight membrane wall (30), and
the absorption units (18') arranged between two evaporating units (12') in each case have an absorption channel (40) in each case on at least two sides of the cooling medium channel (38) opposite each other, said absorption channel being separated from the assigned cooling medium channel (38) by a heat-conducting, vapor and liquid-tight wall (36), wherein the absorption channel (40) is loaded with vapor from the vapor chamber (32) via a vapor-permeable, liquid-tight membrane wall (42) provided on the side of the absorption channel (40) opposite the heat-conducting wall (36).

2. The absorption refrigeration machine according to claim 1, wherein the pressure in the vapor chamber (32) is reduced so far that vapor is formed at the heat-conducting, vapor-permeable and liquid-tight wall (24) in the coolant channel (26) of a respective evaporating unit (12') by means of cooling the refrigerant (16) and this vapor enters into the vapor chamber (32) through the vapor-permeable, liquid-tight membrane wall (30), via which the absorption channel (40) of a respective absorption unit (18') is loaded with vapor.

3. The absorption refrigeration machine according to any of the preceding claims, wherein the evaporator (12) and the absorber (18) are accommodated in a common housing (44) comprising the vapor chamber (32).

4. The absorption refrigeration machine according to any of the preceding claims, further comprising a desorber (46) for desorption of the refrigerant from the low-refrigerant pair (48) of working substances and
a condenser (50) for condensation of the refrigerant (14) by means of subsequent tension release.

5. The absorption refrigeration machine according to claim 4, wherein
the desorber (46) comprises at least one desorption unit (46') having a heating medium channel (56) through which a heating medium (15) flows and which is delimited at least in part by a heat-conducting, vapor and liquid-tight wall (54), and at least one desorption channel (58) loaded by a refrigerant-rich pair (48) of working substances adjoining the heat-conducting wall (54), wherein the desorption channel (58) is separated on its side opposite the heat-conducting wall (54) by a vapor-permeable, liquid-tight membrane wall (60) from a further vapor chamber (62), and
the condenser (50) comprises at least one condensation unit (50') having a cooling-medium channel (66) through which a cooling medium (34) flows, at least in part delimited by a heat-conducting, vapor and liquid-tight wall (64) and at least one condensation channel (68) adjoining the heat-conducting wall (64), wherein the condensation channel (68) is loaded with vapor from the further vapor chamber (62) via a membrane wall (70) provided on a side opposite the heat-conducting wall (66).

6. The absorption refrigeration machine according to claim 5, wherein the desorber (46) comprises several desorption units (46').

7. The absorption refrigeration machine according to claim 5 or 6, wherein the condenser (50) comprises several condensation units (50').

8. The absorption refrigeration machine according to any of the preceding claims, wherein at least one desorption unit (46') is provided, which has a desorption channel (58) on at least two opposing sides of the heating medium channel (56), in each case separated from the heating medium channel (56) by a heat-conducting, vapor and liquid-tight wall (54), wherein the desorption channel (58) is separated from the further vapor chamber (62) on its side opposite the heat-conducting wall (54) by a vapor-permeable, liquid-tight membrane wall (60).

9. The absorption refrigeration machine according to any of the preceding claims, wherein at least one condensation unit (50') is provided, which has a condensation channel (68) separated on at least two opposing sides of the cooling medium channel (66), which is separated from the cooling medium channel (66) by a heat-conducting, vapor and liquid-tight wall (64), wherein the condensation channel (68) is loaded with vapor from the further vapor chamber (62) via a vapor-permeable, liquid-tight membrane wall (70) provided on a side of the condensation channel (68) opposing the heat-conducting wall (64).

10. The absorption refrigeration machine according to any of the preceding claims, wherein both the first vapor chamber (32) and the further vapor chamber (62) are subject to negative chamber, wherein preferably the pressure in the further vapor chamber (62) is greater than in the first vapor chamber (32).

11. The absorption refrigeration machine according to any of the preceding claims, wherein the evaporator (12) and the absorber (18) on the one hand, and the desorber (46) and the condenser (50) on the other hand, are accommodated in two separate housings (44, 72) comprising the first or the further vapor chamber (32, 62).

12. The absorption refrigeration machine according to any of the preceding claims, wherein in each case a desorption unit (46') and a condensation unit (50') are provided for the formation of an integrated desorber/condenser unit (84) in a successive arrangement of several desorption and condensation units, wherein a respective pair of desorption and condensation units or condensation and desorption units directly following each other preferably have vapor-permeable, liquid-tight membrane walls (60, 70) facing each other.

13. The absorption refrigeration machine according to any of the preceding claims, wherein a common cooling medium circuit (34) is provided for the absorber (18) and the condenser (50).

14. The absorption refrigeration machine according to any of the preceding claims, wherein the different channels including the heat-conducting, vapor and liquid-tight walls or vapor-permeable, liquid-tight membrane walls delimiting them consist of plastic.

## Revendications

1. Machine frigorifique à absorption (10) avec un évaporateur (12) destiné à l'évaporation d'un agent frigorifique (14) dans le cas d'une réception de chaleur depuis un circuit frigoporteur (16) et un absorbeur (18) destiné à l'absorption de la vapeur de l'agent frigorifique (20) par la paire d'agents concentrée et pauvre en agent frigorifique (22), dans laquelle
l'évaporateur (12) présente plusieurs unités d'évaporation (12') qui présentent respectivement un canal frigoporteur (26) qui est parcouru par le frigoporteur (16) et délimité au moins partiellement par une paroi thermoconductrice (24) étanche à la vapeur et aux liquides, et au moins un canal d'agent frigorifique (28) qui jouxte la paroi thermoconductrice (24) et est sollicité par l'agent frigorifique (14), dans laquelle le canal d'agent frigorifique (28) est séparé sur son côté opposé à la paroi thermoconductrice (24) par une paroi de membrane (30) d'un espace de vapeur (32), laquelle paroi de membrane est perméable à la vapeur et étanche aux liquides, et
l'absorbeur (18) présente plusieurs unités d'absorption (18') qui présentent respectivement un canal d'agent de refroidissement qui est parcouru par un agent de refroidissement (34) et délimité au moins partiellement par une paroi thermoconductrice (36) étanche à la vapeur et aux liquides, et au moins un canal d'absorption (40) qui jouxte la paroi thermoconductrice, dans laquelle la paire d'agents concentrée et pauvre en agent frigorifique (22) est acheminée jusqu'au canal d'absorption (40) et dans laquelle le canal d'absorption (40) est sollicité avec de la vapeur d'agent frigorifique (20) venue de l'espace de vapeur (32) par une paroi de membrane (42) perméable à la vapeur et étanche aux liquides qui est prévue sur son côté opposé à la paroi thermoconductrice (36),
**caractérisé en ce que**
pour la formation d'une unité intégrée évaporateur/absorbeur (82) dans un agencement se succédant les uns après les autres des plusieurs unités d'évaporation et d'absorption est respectivement prévu en alternance une unité d'évaporation (12') et une unité d'absorption (18'), dans laquelle
une paire respective d'unités d'évaporation et d'absorption ou d'unités d'absorption et d'évaporation se succédant immédiatement présente des parois de membrane (30, 42) perméables à la vapeur et étanches aux liquides tournées les une vers les autres,
les unités d'évaporation (12') agencées entre deux unités d'absorption (18') présentent respectivement sur au moins deux côtés opposés les uns aux autres du canal frigoporteur (26) un canal d'agent frigorifique (28) qui est séparé, par une paroi thermoconductrice (24) étanche à la vapeur et aux liquides, du canal frigoporteur (26) attribué, dans laquelle le canal d'agent frigorifique (28) est séparé sur son côté opposé à la paroi thermoconductrice (24) par une paroi de membrane (30) de l'espace de vapeur (32), laquelle paroi de membrane est perméable à la vapeur et étanche aux liquides, et
les unités d'absorption (18') agencées entre deux unités d'évaporation (12') présentent respectivement sur au moins deux côtés opposés les uns aux autres du canal d'agent de refroidissement (38) un canal d'absorption (40) respectif qui est séparé du canal d'agent de refroidissement (38) par une paroi thermoconductrice (36) étanche à la vapeur et aux liquides, dans laquelle le canal d'absorption (40) est sollicité avec de la vapeur venue de l'espace de vapeur (32) par une paroi de membrane (42) perméable à la vapeur et étanche aux liquides qui est prévue sur un côté opposé à la paroi thermoconductrice (36) du canal d'absorption (40).

2. Machine frigorifique à absorption selon la revendication 1, dans laquelle la pression dans l'espace de vapeur (32) est suffisamment basse pour que, contre la paroi thermoconductrice (24) étanche à la vapeur et aux liquides dans le canal frigoporteur (26) d'une unité d'évaporation (12') respective, de la vapeur se produise par réfrigération du frigoporteur (16) et cette vapeur pénètre dans l'espace de vapeur (32) par la paroi de membrane (30) perméable à la vapeur et étanche aux liquides, par lequel le canal d'absorption (40) d'une unité d'absorption (18') respective est sollicité avec de la vapeur.

3. Machine frigorifique à absorption selon l'une des revendications précédentes, dans laquelle l'évaporateur (12) et l'absorbeur (18) sont installés dans un logement (44) commun comprenant l'espace de vapeur (32).

4. Machine frigorifique à absorption selon l'une des revendications précédentes, comprenant en outre
un désorbeur (46) destiné à désorber l'agent frigorifique hors de la paire d'agents riche en agent frigorifique (48) et
un condenseur (50) destiné à condenser l'agent frigorifique (14) avec détente ultérieure.

5. Machine frigorifique à absorption selon la revendication 4, dans laquelle
le désorbeur (46) comprend au moins une unité de désorption (46') avec un canal d'agent de chauffage (56) qui est parcouru par un agent de chauffage (15) et délimité au moins partiellement par une paroi thermoconductrice (54) étanche à la vapeur et aux liquides, et avec au moins un canal de désorption (58) qui jouxte la paroi thermoconductrice (54) et est sollicité par la paire d'agents riche en agent frigorifique (48), dans laquelle le canal de désorption (58) est séparé sur son côté opposé à la paroi thermoconductrice (54) par une paroi de membrane (60) d'un autre espace de vapeur (62), laquelle paroi de membrane est perméable à la vapeur et étanche aux liquides, et
le condenseur (50) comprend au moins une unité de condensation (50') avec un canal d'agent de refroidissement (66) qui est parcouru par un agent de refroidissement (34) et délimité au moins partiellement par une paroi thermoconductrice (64) étanche à la vapeur et aux liquides, et avec au moins un canal de condensation (68) qui jouxte la paroi thermoconductrice (64), dans laquelle le canal de condensation (68) est sollicité avec de la vapeur venue de l'autre espace de vapeur (62) par une paroi de membrane (70) qui est prévue sur son côté opposé à la paroi thermoconductrice (66).

6. Machine frigorifique à absorption selon la revendication 5, dans laquelle le désorbeur (46) comprend plusieurs unités de désorption (46').

7. Machine frigorifique à absorption selon la revendication 5 ou 6, dans laquelle le condenseur (50) comprend plusieurs unités de condensation (50').

8. Machine frigorifique à absorption selon l'une des revendications précédentes, dans laquelle est prévue au moins une unité de désorption (46') qui présente sur au moins deux côtés opposés les uns aux autres du canal d'agent de chauffage (56) respectivement un canal de désorption (58) qui est séparé du canal d'agent de chauffage (56) par une paroi thermoconductrice (54) étanche à la vapeur et aux liquides, dans laquelle le canal de désorption (58) est séparé sur son côté opposé à la paroi thermoconductrice (54) par une paroi de membrane (60) de l'autre espace de vapeur (62), laquelle paroi de membrane est perméable à la vapeur et étanche aux liquides.

9. Machine frigorifique à absorption selon l'une des revendications précédentes, dans laquelle est prévue au moins une unité de condensation (50') qui présente sur au moins deux côtés opposés les uns aux autres du canal d'agent de refroidissement (66) respectivement un canal de condensation (68) qui est séparé du canal d'agent de refroidissement (66) par une paroi thermoconductrice (64) étanche à la vapeur et aux liquides, dans laquelle le canal de condensation (68) est sollicité avec de la vapeur venue de l'autre espace de vapeur (62) par une paroi de membrane (70) perméable à la vapeur et étanche aux liquides, lequel est prévu sur un côté opposé à la paroi thermoconductrice (64) du canal de condensation (68).

10. Machine frigorifique à absorption selon l'une des revendications précédentes, dans laquelle tant dans le premier espace de vapeur (32) que dans l'autre espace de vapeur (62) une dépression prédomine, dans laquelle la pression dans l'autre espace de vapeur (62) est de préférence supérieure à celle dans le premier espace de vapeur (32).

11. Machine frigorifique à absorption selon l'une des revendications précédentes, dans laquelle l'évaporateur (12) et l'absorbeur (18) d'une part et le désorbeur (46) et le condenseur (50) d'autre part sont installés dans deux logements (44, 72) séparés qui comprennent le premier ou l'autre espace de vapeur (32, 62).

12. Machine frigorifique à absorption selon l'une des revendications précédentes, dans laquelle pour la formation d'une unité intégrée désorbeur/condenseur (84) dans un agencement se succédant les uns après les autres de plusieurs unités de désorption et de condensation est respectivement prévue en alternance une unité de désorption (46') et une unité de condensation (50'), dans laquelle une paire respective d'unités de désorption et de condensation ou d'unités de condensation et de désorption se succédant immédiatement présente de préférence des parois de membrane (60, 70) perméables à la vapeur et étanches aux liquides tournées les une vers les autres.

13. Machine frigorifique à absorption selon l'une des revendications précédentes, dans laquelle pour l'absorbeur (18) et le condenseur (50) est prévu un circuit d'agent de refroidissement (34) commun.

14. Machine frigorifique à absorption selon l'une des revendications précédentes, dans laquelle les différents canaux y compris, jouxtant ceux-ci, les parois thermoconductrices étanches à la vapeur et aux liquides ou les parois de membrane perméables à la vapeur et étanches aux liquides sont fabriqués en matière synthétique.
